# EUROPÄISCHE PATENTSCHRIFT

(11) **EP 0 522 193 B1**
(45) Veröffentlichungstag und Bekanntmachung des Hinweises auf die Patenterteilung: **14.05.1997**
(21) Anmeldenummer: 91111578.0
(22) Anmeldetag: 11.07.1991
(51) Int. Cl.: H04Q 11/04, H04M 3/24

(54) **Digitales Koppelnetz**
Digital coupling network
Réseau de couplage numérique

(43) Veröffentlichungstag der Anmeldung: 13.01.1993
(73) Patentinhaber: SIEMENS AKTIENGESELLSCHAFT, 80333 München (DE)
(72) Erfinder: Ernst, Wolfram, Dipl.-Ing., W-8000 München 70 (DE); Lindwurm, Franz, Dipl.-Ing., W-8000 München 40 (DE)

(56) Entgegenhaltungen:
- EP-A- 0 360 065
- DE-A- 2 540 577
- DE-A- 2 910 236
- GB-A- 2 014 018

## Beschreibung

In größeren digitalen Koppelnetzen sind die Zeitstufen und Raumstufen in getrennt konfigurierbaren Koppelmoduln (Zeitkoppelmoduln und Raumkoppelmoduln) zusammengefaßt.

Aus der britischen Patentanmeldung GB-A-2 014 018 ist ein Koppelnetz mit N+1 Zeitkoppelmodulen und zwei Raumkoppelmodulen (aktiv und stand-by) bekannt, wobei die Zeitkoppelmodule Eingangs- und Ausgangsmodule des Koppelnetzes darstellen. Das Koppelnetz bietet bezüglich der Zeitkoppelmodule eine 1 aus N Redundanz, d.h. im Fehlerfall steht zum Zwecke der Ersatzschaltung eines fehlerhaften Zeitkoppelmoduls ein Ersatz-Zeitkoppelmodul (20x) bereit. Um einen Fehler nach erfolgter Ersatzschaltung genauer zu bestimmen, wird jeweils ein gesamter Weg durch das Koppelnetz getestet, wobei hierzu am Eingang und Ausgang eines Zeitkoppelmoduls jeweils eine Umschalteeinrichtung vorgesehen ist.

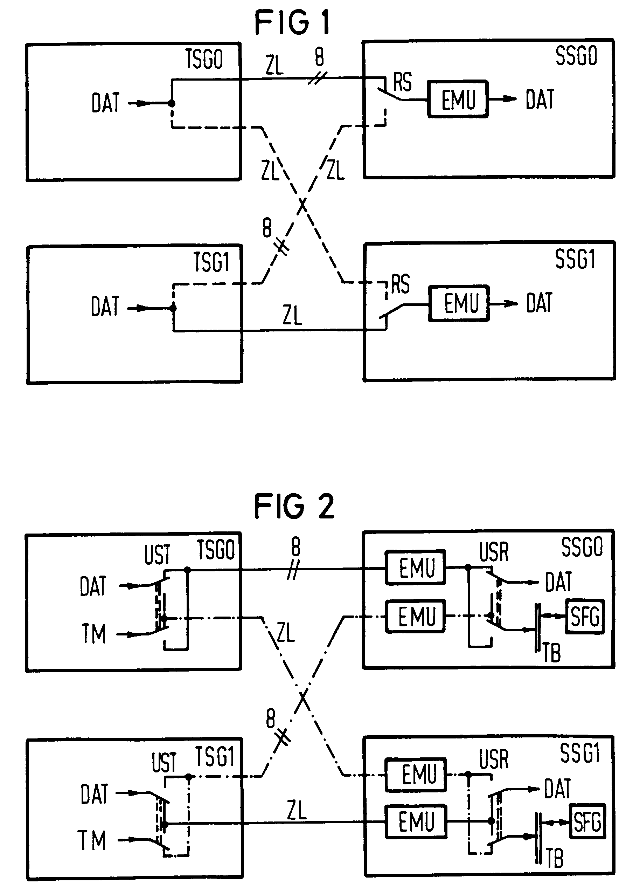

Figur 1 zeigt eine weitere bekannte Verbindungsstruktur zwischen zwei benachbarten Koppelmoduln eines digitalen Koppelneztes. Bei den Koppelmoduln handelt es sich um ein Zeitkoppelmodul und ein Raumkoppelmodul, die jeweils gedoppelt sind, d.h. aus zwei identischen Zeitkoppelmodulhälften TSGO und TSG1 sowie zwei identischen Raumkoppelmodulhälften SSGO und SSG1 zusammengesetzt sind.
Die beiden dargestellten Koppelmoduln sind durch Übertragungsstrecken ZL miteinander verbunden. Die in Figur 1 dargestellten Ubertragungsstrecken ZL zur Übertragung eines Datenstroms DAT beziehen sich nur auf eine Übertragungsrichtung, nämlich vom Zeitkoppelmodul zum Raumkoppelmodul. Die Ubertragungsstrecken für die umgekehrte Übertragungsrichtung, nämlich vom Raumkoppelmodul zum Zeitkoppelmodul sind nicht dargestellt. Eine Übertragungsstrecke umfaßt wenigstens eine Multiplexleitung mit jeweils mehreren Übertragungskanälen.

Jede Koppelmodulhälfte beinhaltet für die Verbindung mit einem benachbarten Kopppelmodul eine nicht dargestellte Sende- und Empfangseinheit, die mit den entsprechenden Sende- und Empfangseinheiten der beiden Koppelmodulhälften eines Koppelmoduls der benachbarten Koppelnetzstufe durch jeweils eine Übertragungsstrecke ZL verbunden ist, so daß eine Empfangseinheit jeweils zwei Eingänge und eine Sendeeinheit jeweils zwei Ausgänge für die daran angeschlossenen Übertragungsstrecken aufweist. In der Sendeeinheit wird unter anderem der Datenstrom DAT auf die zwei Ausgänge aufgeteilt und so an beide benachbarten Koppelmodulmodulhälften gesendet.

Die Empfangseinheit umfaßt u.a. einen Empfangsschalter RS zum Umschalten zwischen beiden Übertragungsstrecken und einen Empfangspufferspeicher EMU zum Zwischenspeichern der empfangenen Daten DAT, sowie der Durchführung einer Rahmensynchronisation.
Eine der beiden an eine Empfangseinheit bzw. Sendeeinheit angeschlossene Übertragungsstrecke wird jeweils als aktive Übertragungsstrecke und die andere als passive, d.h. redundante Übertragungsstrecke betrieben, was in FIG 1 durch eine gestrichelte Linie dargestellt ist.

Die Betriebsweise (Konfiguration) der Übertragungsstrecken ist u.a. durch die Stellung der Empfangsschalter RS festgelegt. Ein Wechsel der Betriebsweise (Umkonfiguration) der Übertragungsstrecken erfolgt entweder zu Prüfzwecken oder bei bestimmten Ausfallkonstellationen. Fällt z.B. die Zeitkoppelmodulhälfte TSG0 aus, dann erfolgt eine Umkonfigurtion, bei der u.a. der Empfangsschalter RS der Raumkoppelmodulhälfte SSG0 umgeschaltet wird. Fällt in dieser Situation zusätzlich die Raumkoppelmodulhälfte SSG1 aus, erfolgt zusätzlich eine Umschaltung des Empfangsschalters in der Zeitkoppelmodulhälfte TSG1 für die nicht dargestellte umgekehrte Übertragungsrichtung.

Wegen des parallelen Aussendens des Datenstroms DAT von einer Koppelmodulhälfte an beide Koppelmodulhälften der benachbarten Koppelnetzstufe kann es während der Durchführung einer Umkonfiguration zu Doppelempfang von Informationen, insbesondere von Steuerinformationen, kommen. Außerdem kommt es bei Umkonfigurationen wegen des empfangsseitigen Umschaltens an einer Stelle vor dem Empfangsspeicher EMU zu Schaltknacken, da der Datenstrom dabei neu synchronisiert werden muß. Ein weiterer Nachteil der bekannten Verbindungsstruktur ist darin zu sehen, daß die passiven Übertragungsstrecken nur durch Routineumschaltungen prüfbar sind, da erst am Ausgang des Empfangsspeichers ein Zugriff auf den Datenstrom möglich ist.

Der Erfindung liegt die Aufgabe zugrunde, die genannten Nachteile zu vermeiden.

Diese Aufgabe wird durch die Merkmale des Anspruchs 1 gelöst.

Im folgenden wird ein spezielles Ausführungsbeispiel der Erfindung anhand von FIG 2 näher erläutert.

FIG 2 zeigt eine spezielle erfindungsgemäße Verbindungsstruktur zwischen zwei benachbarten Koppelmoduln eines digitalen Koppelnetzes. Im folgenden wird nur auf die Unterschiede zu FIG 1 näher eingegangen.
Die Sendeeinheit einer Koppelmodulhälfte enthält eine Umschalteeinrichtung, die in Form eines Doppelsendeschalters UST realisiert ist. Der Doppelsendeschalter bewirkt zum einen, daß der zu übertragende Datenstrom DAT nur an einen der beiden Ausgänge durchgeschaltet wird. Dies hat zur Folge, daß auf der passiven Übertragungsstrecke kein Datenstrom übertragen wird und damit eine eindeutige Datenübertragung sichergestellt, d.h. ein Doppelempfang von Informationen vermieden ist. Der Doppelsendeschalter ermöglicht zum anderen das Einspeisen eines Testmusterstroms TM auf die passive Übertragungsstrecke.

Die Empfangseinheit enthält für jede Übertragungsstrecke einen separaten Empfangsspeicher EMU. Hinter den beiden Empfangsspeichern ist eine Umschalteeinrichtung in Form eines Doppelempfangsschalters USR angeordnet. Der Doppelempfangsschalter dient zum einen dem Wechsel der Betriebsweise der Übertragungsstrecke, zum anderen dem Ausblenden des Testmusterstroms an eine Überwachungseinrichtung SFG.
Da in den Empfangsspeichern außer einer Zwischenspeicherung auch eine Rahmensynchronisation erfolgt, wird durch den Doppelempfangsschalter bei einem Umschaltevorgang eine lückenlose synchrone Umschaltung durchgeführt.

Die Überwachungseinrichtung SFG dient der Überwachung der passiven Übertragungsstrecken und hat über einen Testbus TB Zugriff auf die Empfangsspeicher der passiven Übertragungsstrecken. Eine Umschaltung der Betriebsweise der Übertragungsstrecken zu Testzwecken ist somit überflüssig. Ein Test der passiven Übertragungsstrecken zwischen den Koppelmoduln eines Koppelnetzes kann beispielsweise durch einen Anreiz von der zentralen Steuerung des Vermittlungssystems eingeleitet werden. Daraufhin werden Testmusterströme über die Sendeeinheiten auf die passiven Übertragungsstrecken eingespeist. In den Empfangsspeichern der entsprechenden Empfangseinheiten können nach einer erfolgten Aufsynchronisation auf den Testmusterstrom die Testmuster kanalindividuell durch die Überwachungseinrichtung empfangen und ausgewertet werden. Im Fehlerfall kann eine entsprechende Fehlermeldung an die zentrale Steuerung des Vermittlungssystems abgegeben werden.

## Patentansprüche

1. Digitales Koppelnetz eines Vermittlungssystems mit folgenden Merkmalen:
a) es besteht aus Zeitstufen und Raumstufen,
b) die Zeitstufen und Raumstufen bestehen jeweils aus wenigstens einem, aus zwei identischen Koppelmodulhälften aufgebauten Koppelmodul,
c) eine Koppelmodulhälfte beinhaltet für die Verbindung mit einem Koppelmodul einer benachbarten Koppelnetzstufe jeweils eine Sende- und Empfangseinheit, die mit den entsprechenden Sende- und Empfangseinheiten der beiden Koppelmodulhälften dieses Koppelmoduls durch jeweils eine Übertragungsstrecke (ZL) verbunden ist, so daß eine Empfangseinheit jeweils zwei Eingänge und eine Sendeeinheit jeweils zwei Ausgänge für die daran angeschlossenen Übertragungsstrecken aufweist,
d) eine der beiden an eine Empfangseinheit bzw. Sendeeinheit angeschlossenen Übertragungsstrecke wird normalerweise als aktive Übertragungsstrecke zur Übertragung eines Datenstroms (DAT) und die andere als passive, d.h. redundante Übertragungsstrecke betrieben,
e) in bestimmten Fällen erfolgt ein Wechsel der Betriebsweise der beiden Übertragungsstrecken,
**gekennzeichnet** durch folgende Merkmale:
f) eine Sendeeinheit beinhaltet eine Sendeumschalteeinrichtung (UST), die bewirkt, daß der zu übertragende Datenstrom nur an einen der beiden Ausgänge durchgeschaltet wird, und gleichzeitig die Einspeisung eines Testmusterstroms (TM) an den anderen der beiden Ausgänge erfolgen kann,
g) eine Empfangseinheit weist für jede der beiden angeschlossenen Übertragungsstrecken einen separaten Empfangsspeicher (EMU) auf,
h) eine Empfangseinheit beinhaltet eine Empfangsumschalteeinrichtung (USR), die hinter den Empfangsspeichern angeordnet ist und bewirkt, daß nur der empfangene Datenstrom weitergeschaltet wird, während der im Testfall empfangene Testmusterstrom an eine Überwachungseinrichtung (SFG) ausgeblendet wird, die daraus die passive Übertragungsstrecke auf Intaktheit überwachen kann.

## Claims

1. Digital coupling network of a switching system having the following features:
a) said coupling network comprises timing stages and space-division multiplex stages,
b) the timing stages and space-division multiplexer stages each comprise at least one coupling module which is formed from two identical coupling module halves,
c) a coupling module half in each case contains a transmitting and receiving unit for connection to a coupling module of an adjacent coupling network stage, which transmitting and receiving unit is connected to the corresponding transmitting and receiving units of the two coupling module halves of this coupling module by means of each in case one transmission path (ZL), such that a receiving unit in each case has two inputs, and a transmitting unit in each case has two outputs for the transmission paths connected to it,
d) one of the two transmission paths which is connected to a receiving unit or transmitting unit is normally operated as an active transmission path for transmitting a data stream (DAT), and the other is operated as a passive, that is to say redundant, transmission path,
e) in certain cases, a change in the method of operation of the two transmission paths takes place,
characterized by the following features:
f) a transmitting unit contains a transmission changeover device (UST) which causes the data stream to be transmitted to be connected only to one of the two outputs, and a test pattern stream (TM) can be supplied at the same time to the other of the two outputs,
g) a receiving unit has a separate reception memory (EMU) for each of the two connected transmission paths,
h) a receiving unit contains a reception changeover device (USR) which is arranged downstream of the reception memories and causes only the received data stream to be passed on, while the test pattern stream which is received in the event of a test is extracted to a monitoring device (SFG), which can use this stream to monitor whether the passive transmission path is intact.

## Revendications

1. Réseau numérique de connexion d'un système de commutation ayant les caractéristiques suivantes :
a) il est constitué d'étages temporels et d'étages spatiaux,
b) les étages temporels et les étages spatiaux sont chacun constitués d'au moins un module de connexion formé de deux moitiés identiques de modules de connexion,
c) une moitié de module de connexion comprend, pour la liaison avec un module de connexion d'un étage de réseau de connexion voisin, une unité d'émission et une unité de réception, qui sont reliées aux unités d'émission et aux unités de réception correspondantes des deux moitiés de modules de connexion de ce module de connexion par respectivement une voie (ZL) de transmission, de sorte que chaque unité de réception comporte deux entrées et chaque unité d'émission comporte deux sorties pour les voies de transmission qui leur sont connectées,
d) l'une des deux voies de transmission connectées à une unité de réception ou à une unité d'émission fonctionne normalement comme voie de transmission active pour la transmission d'un flux (DAT) de données et l'autre voie de transmission fonctionne comme voie de transmission passive c'est-à-dire redondante,
e) il s'effectue dans certains cas un changement de mode de fonctionnement des deux voies de transmission,
caractérisé par les caractéristiques suivantes :
f) une unité d'émission comprend un dispositif (UST) de commutation d'émission, qui fait que le flux de données à transmettre n'est communiqué qu'à l'une des deux sorties et qu'en même temps la fourniture d'un flux (TM) de motif de test peut s'effectuer à l'autre des deux sorties,
g) une unité de réception comporte pour chacune des deux voies de transmission connectées une mémoire (EMU) de réception distincte,
h) une unité de réception comprend un dispositif (USR) de commutation de réception, qui est monté derrière les mémoires de réception et qui fait qu'il n'est retransmis que le flux de données reçu tandis que le flux de motif de test reçu en cas de test est extrait vers un dispositif (SFG) de contrôle, qui peut contrôler à partir du flux de motif de test que la voie de transmission passive est intacte.
